# EUROPEAN PATENT SPECIFICATION

(11) **EP 2 723 194 B1**
(45) Date of publication and mention of the grant of the patent: **14.01.2015**
(21) Application number: 12728604.5
(22) Date of filing: 21.06.2012
(51) Int. Cl.: A23L 1/221, A23L 2/56, A23G 1/00, A23G 1/30

(54) **METHOD OF PRODUCING AN AROMATISED AQUEOUS LIQUID**
VERFAHREN ZUR HERSTELLUNG EINER AROMATISIERTEN WÄSSRIGEN FLÜSSIGKEIT
PROCÉDÉ DE PRODUCTION D'UN LIQUIDE AQUEUX AROMATISÉ

(30) Priority: 22.06.2011 EP 11171079; 22.06.2011 US 201161499778 P
(43) Date of publication of application: 30.04.2014
(73) Proprietor: Nestec S.A., 1800 Vevey (CH)
(72) Inventor: RYAN, Angela, York Yorkshire Y031 8LG (GB); CAVINATO, Mauro, York Yorkshire YO31 7DE (GB); TAYLOR, Jonathan, York Yorkshire Y061 1LL (GB)
(74) Representative: Gagliardi, Tatiana
(86) International application number: PCT/EP2012/061989
(87) International publication number: WO 2012/175620

(56) References cited:
- EP-A1- 0 988 794
- US-A- 3 579 349
- US-A- 4 072 761
- DATABASE WPI Week 198627 Thomson Scientific, London, GB; AN 1986-174138 XP002663820, & JP 61 108351 A (TAKASAGO PERFUMERY CO LTD) 27 May 1986 (1986-05-27)

## Description

### Field of the invention

The present invention relates to a method to produce a liquid which is aromatised with aroma compounds derived from cocoa or cocoa-based products, e.g. aroma compounds derived from cocoa powder, cocoa liquor, or reaction products formed during the production of chocolate and chocolate compound. The resulting aromatised liquid can for example be used to modify or improve the flavour profile of liquid chocolate, a liquid chocolate compound, or an aqueous liquid to be used e.g. in the production of soluble powders for the preparation of instant chocolate drinks.

### Background

Aromas are an important part of cocoa liquor and hence of any product containing cocoa or chocolate. The aroma profile depends on variety and origin of the cocoa, but also on the further processing, in particular the conching step, and is very difficult to master. In addition to aromas originating from the cocoa powder or the cocoa liquor, aromas coming from milk powder, which is used as an ingredient in liquid chocolate, and aromas coming from various reaction products generated during the manufacturing of liquid chocolate play an important role for the final aroma or flavour profile of cocoa-based products such as chocolate or chocolate compound (e.g. where cocoa butter is partially/totally replaced by known cocoa butter equivalents (CBE) or cocoa butter substitutes (CBS). For the consumer perception the aroma profile is obviously extremely important. During the usual processing of the chocolate, it can happen that volatiles which would be desirable in the final product are lost.

In the production of soluble coffee it is known to recover coffee aromas which are given off during the processing of the soluble coffee powder and to reincorporate these aromas, e.g. into concentrated coffee extract prior to drying into a soluble coffee powder. The coffee aromas may be recovered at several points during processing, e.g. by aroma stripping of roast and ground coffee prior to extraction. WO 01/13735 discloses a method of recovering coffee aroma from coffee grounds comprising wetting, heating and stripping aroma from coffee grounds exposing the coffee grounds to a decreased pressure. The coffee aroma compounds released by this treatment are then recovered. EP 1069830 (note: GEAR patent) discloses a method comprising providing a slurry of roast and ground coffee and stripping aroma from this slurry by using a gas to provide an aromatised gas. In both methods aroma compounds are released from roast and ground coffee into a gas phase from where it is collected. This gas stream is composed of gases previously trapped in the roast coffee (primarily carbon dioxide), and possibly entrained air or steam. Recovering aroma from the gas is usually achieved by condensation of the aroma at low temperature, e.g. by cryogenic condensation. Cryogenic condensation is expensive and further does not lead to a complete recovery of all highly volatile coffee aroma compounds. There is a need to improve the recovery of high volatile aroma compounds and to reduce cost and complexity without subjecting the aroma containing gas to elevated temperatures that would lead to degradation of aroma compounds.

JP-A-61/108351 discloses a method for producing an aromatised liquid by (a) providing a gas comprising cocoa aroma and water, and (b) condensing this gas to produce an aromatised liquid aqueous phase and a gas phase. The condensed vaporised flavouring component can be used to prepare cocoa drink and confectionery products.

### Summary of the invention

The inventors have found that a gas comprising aroma derived from cocoa or cocoa-based products, and water can be condensed to produce a gas phase and a liquid aqueous phase. The gas phase comprising aroma compounds can be pressurised in the presence of an absorption liquid leading to the transfer of aroma compounds from the gas phase to the absorption liquid to produce an aromatised liquid. In this process the temperature increase that would normally happen during a pressurisation is avoided by the cooling effect of the liquid, and the recovery of highly volatile aroma compounds is improved compared to prior art methods.

Therefore, the present invention relates to a method of producing an aromatised liquid, the method comprising: a) providing a gas comprising aroma derived from cocoa or cocoa-based products, and water; b) condensing the aroma and water comprising gas, to provide a liquid aqueous phase and a gas phase; and c) subjecting the gas phase obtained by step b) to pressurisation in the presence of an absorption liquid to produce an aromatised liquid.

The cocoa-based product used to obtain the aromas can for example be liquid chocolate or a liquid chocolate compound, and in this case the aroma may come from various ingredients of the liquid chocolate or chocolate compound, and not necessarily from the cocoa itself.

### Brief description of the figures

- Figure 1: schematically illustrates a liquid ring compressor.
- Figure 2: illustrates an example of a process for producing a liquid chocolate or liquid chocolate compound
- Figure 3: shows a GC-MS of an aromatised liquid exiting the liquid ring compressor in Example 1.

### Detailed description of the invention

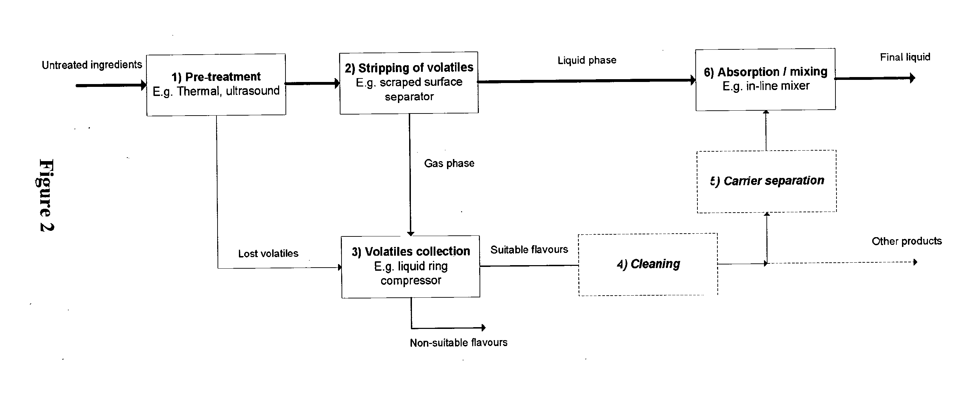

Fig. 2 illustrates an example for a method according to the present invention.

In the example illustrated in Fig. 2, liquid chocolate or a liquid chocolate compound is first subjected to one or more pre-treatment steps which include processing of the ingredients such as roasting, mixing, refining or conching.

According to the present invention, in a next step a gas comprising aroma from cocoa or a cocoa based product - for example liquid chocolate or a liquid chocolate compound - and water is provided.

In the following it will only be referred to as "liquid chocolate", but it should be noted that this covers in the present context liquid chocolate as well as any type of liquid chocolate compounds. It should also be noted that the aroma can also be derived from cocoa directly, e.g. during or after roasting.

In the case where liquid chocolate, a liquid chocolate compound, or other lquid cocoa-based product are used, the aroma may be obtained from the liquid chocolate by any suitable method. Several such methods are well known to the skilled person. Preferably, the gas comprising aroma is obtained by stripping liquid chocolate or other cocoa based product to obtain an aroma containing gas.

This operation can be performed in one or more steps. It can be performed by acting on the pressure, preferably using a pressure lying between 0.1-3 bar, and / or by increasing the liquid - gas contact surface in order to improve the volatiles transfer from the liquid phase to the gas phase. The gas phase can be composed either of: (a) dry air or (b) steam. Dry air can be successfully used to extract water and volatiles from the liquid. Steam can also be used to extract volatiles and can then easily be condensed in a downstream unit. Moreover, using steam can prevent oxidation of some sensitive compounds. As a separation unit any machine which creates a higher gas-liquid contact surface, thus improving the volatiles mass transfer, can be used.

The aroma and water comprising gas is condensed to provide a liquid aqueous phase and a gas phase. Condensation can be achieved by any suitable means, but will usually be achieved by lowering the temperature of the gas so that a liquid aqueous phase condenses from the aroma and water comprising gas. The temperature used will e.g. depend on the pressure in the system and the moisture content of the aroma and water comprising gas. Usually, the aroma and water comprising gas will be condensed at a temperature between 0 to 90°C, such as between 0 and 40°C, such as between 5 and 30°C, or between 5 and 20°C. The pressure will usually be between 0.1 and 3 bar absolute pressure, such as between 0.2 and 2 bar absolute pressure, or between 0.3 and 1 bar absolute pressure. Any suitable condenser known in the art may be used. In a preferred embodiment of the invention, the aroma and water containing gas is not subjected to conditions of temperature and pressure whereat water will be in the solid phase (ice). In a further preferred embodiment, the aroma and water comprising gas is subjected to a minimum temperature above 0°C during the process.

The condensate can either simply be stored for further use, or it can optionally be treated to eliminate unwanted aroma compounds (additional process step not shown in Fig. 2).

The gas phase obtained by the condensation of the aroma and water comprising gas is subjected to pressurisation in the presence of an absorption liquid to produce an aromatised aqueous liquid (step 3) in Fig. 2). By subjection to pressurisation is meant that the pressure is increased compared to the pressure during the condensation step. Preferably, the pressure is increased to a value between 1 and 20 bar absolute pressure, such as between 2 and 15 bar absolute pressure, or between 2 and 8 bar absolute pressure, during the pressurisation step. The pressurisation is performed in the presence of an absorption liquid. By this is meant that the gas phase is in contact with an absorption liquid during the pressurisation. The pressurisation in presence of an absorption liquid results in the transfer of aroma compounds from the gas phase into the absorption liquid to produce an aromatised liquid, and at the same time the absorption liquid may absorb heat created during the pressurisation of the gas, thus preventing the temperature from increasing as much as would have been the case if the gas phase was pressurised without an absorption liquid present. In a preferred embodiment, the weight ratio of absorption liquid to gas phase during the pressurisation is between 1:1 and 10000:1, such as between 3:1 and 5000:1. The absorption liquid can be an aqueous liquid or a liquid fat. It will be chosen based on its polarity and pH in order to selectively remove the highly-volatile aroma compounds. In the case where a liquid chocolate has been used to obtain the aroma, but also in general when the final liquid is to be mixed into liquid chocolate, the absorption liquid is preferably chosen from the different ingredients of the original liquid chocolate or chocolate compound (e.g. water, cocoa butter). Liquid chocolate as such can also be used. Other suitable liquids that could be used are fats (e.g. vegetable fats), oils and flavor solvents such as propylene glycol. To minimise degradation of aroma compounds, the gas phase is preferably subjected to a maximum temperature below 60°C, such as below 50°C, or below 30°C.

Pressurisation can be performed in one or more stages. Having several stages with different temperature / pressure values, and/or using different absorption liquids allows Several aromatized liquids containing different aroma compounds can thereby be obtained from this pressurization stage. These can then for example be selectively reintroduced into the initial liquid chocolate or into another food product.

The pressurisation may be performed in any suitable container or apparatus. The contact surface between the gas phase and the aqueous liquid and the contact time should be sufficient to allow effective transfer of aroma compounds from the gas phase to the liquid aqueous phase and to allow the temperature to be kept within the desired range. The temperature during the pressurisation may e.g. be kept at a desired level by circulating the aqueous liquid through a cooling device to remove heat generated by the pressurisation of the gas phase. As already mentioned, the absorption liquid present during pressurisation may be any suitable liquid, such as e.g. water or cocoa butter. In a preferred embodiment the liquid present during the pressurisation comprises all or a part of the aqueous liquid phase obtained by the condensation of the aroma and water comprising gas. In this way the condensed aqueous liquid phase which may already comprise low and medium volatile chocolate aroma components that were condensed together with water during the condensation step, may be further aromatised by transferring highly volatile aroma compounds to it from the gas phase, such that both aroma condensed during the condensation step and aroma transferred from the gas phase during the pressurisation step may be utilised.

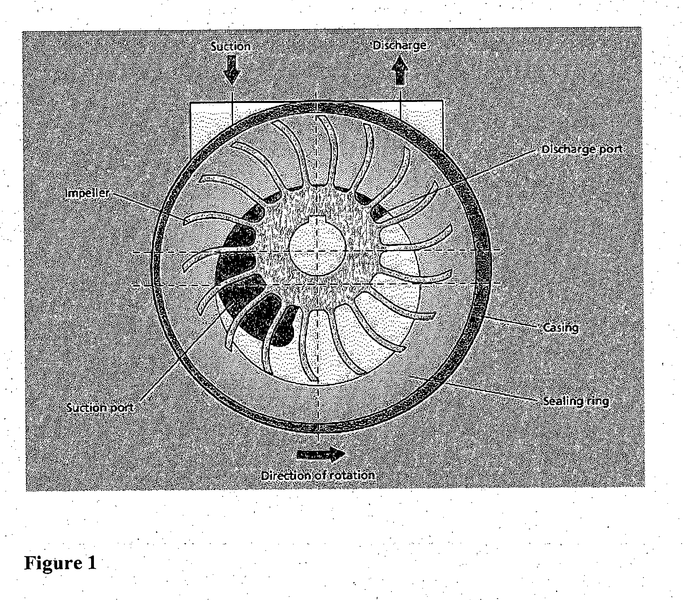

In a preferred embodiment, the pressurisation in presence of an absorption liquid is performed in a liquid ring compressor. A liquid ring compressor compresses gas by rotating a vaned impeller eccentric to a cylindrical casing. The absorption liquid is fed into the pump and, by centrifugal acceleration, forms a moving cylindrical ring against the inside of the casing. This liquid ring creates a series of seals in the space between the impeller vanes, which form compression chambers. The eccentricity between the impeller's axis of rotation and the casing geometric axis results in a cyclic variation of the volume enclosed by the vanes and the ring of aqueous liquid. The gas phase is drawn into the pump via an inlet port in one end of the casing where the volume of the compression chambers formed by the impeller vanes and the liquid ring is largest and the gas is trapped in the compression chambers. The reduction in volume caused by the impeller rotation compresses the gas, and the compressed gas leaves the compressor at a discharge port in the other end of the casing where the volume of the compression chambers is smallest. The function of a liquid ring compressor is illustrated in Fig. 1. To control temperature in the liquid ring compressor, the absorption liquid is preferably circulated through an external heat exchanger. A liquid ring compressor system may be operated continuously. Two or more liquid ring compressors operated in series may be used. When the aqueous liquid phase obtained by the condensation of the aroma and water comprising gas is used as the absorption liquid in a liquid ring compressor, this liquid phase can be further aromatised and at the same time being utilised as the service and cooling liquid of the liquid ring compressor. The gas phase leaving the liquid ring compressor may entrain some liquid. This liquid may be separated from the gas and fed back to the liquid phase.

As schematically shown in Fig. 2, the aromatised liquid obtained may be further cleaned, i.e. refined to obtain the suitable flavour characteristic (cf. Step 4) in Fig. 2). This step is optional, and various technologies van be used to remove unwanted aroma compounds or specifically select desirable aroma compounds. For example, separation technologies, such as membrane separation, can be applied to the obtained liquid to further refine its composition, and concentrate desirable aroma compounds, e.g. by selectively collecting or eliminating some aroma compounds or neutralising acidic and unwanted flavours.

In the case where the liquid which has been used as an absorption liquid is not or at least partly not desired in the end product, it has to be separated from the aromatised liquid obtained in an additional process step (cf. step 5) in Fig. 2). This is for example typically the case when water is sued as the absorption liquid, since the presence of water in chocolate is not desired.

The aromatized liquid obtained, or selected aroma components thereof in the case of additional cleaning or separation steps as discussed above, can be used immediately, e.g. by mixing it with the initial liquid chocolate or liquid chocolate compound, as shown in Fig. 2 (cf. step 6). According to a preferred embodiment of the invention, an in-line mixer is used for this mixing step.

If not used immediately, the aromatised aqueous liquid may preferably be stored under pressure until used. Any suitable pressure may be used, e.g. in the range between 1 and 20 bar absolute pressure. Preferably the storage pressure is the same as the pressure in the compressor.

The method of the present invention may be utilised in the production of chocolate, chocolate compound or any food products based on or containing chocolate. It can also be used in food products containing a cocoa or chocolate aroma such as powdered beverages, ice-cream or other confectionery products.

It allows to provide a final product with the desired characteristics of flavour in a controllable and efficient manner.

### The invention is further illustrated by the following non-limiting examples:

### Example 1

A cocoa liquor feedstream, heated to a temperature of about 115 ± 2°C, was stripped with air in a mixing chamber under vacuum, at a pressure of 0.80 bar absolute, to generate a gas stream containing chocolate aroma compounds and moisture. The gas stream was drawn off the mixing chamber and fed to a condenser operating at about 10°C to obtain an aromatised liquid phase and a gas phase. The gas phase obtained from the condenser was then fed to a liquid ring compressor. The pressure in the liquid ring compressor was increased to about 1.03 bar absolute, at a temperature of about 28°C. Water was used to form the liquid in the liquid ring compressor. The gas leaving the liquid ring compressor was discarded. The recovery of key aroma compounds in the aromatised liquid exiting the liquid ring compressor was analysed by GC-MS:

Samples of the liquid (4g) were weighed into 20ml screw-top headspace vials. Each vial was equilibrated for 60 minutes at 55°C and the headspace volatiles adsorbed onto a PDMS-DVB SPME fibre for 30 minutes also at 55°C. The volatiles were desorbed for 5 minutes at 220°C in the injector of an Agilent 7890A Gas Chromatograph operating in splitless mode, and separated on a 60m x 0.25mm internal diameter x 0.25µm film DB-Wax column (Agilent). The GC oven was programmed from 40°C (5min) to 220°C at 3°C/min and eluting compounds fragmented by electron impact ionisation in an Agilent 5975C mass spectrometer. The components were identified by comparing their fragmentation patterns to those contained in a spectral library (reference spectral library NIST08).

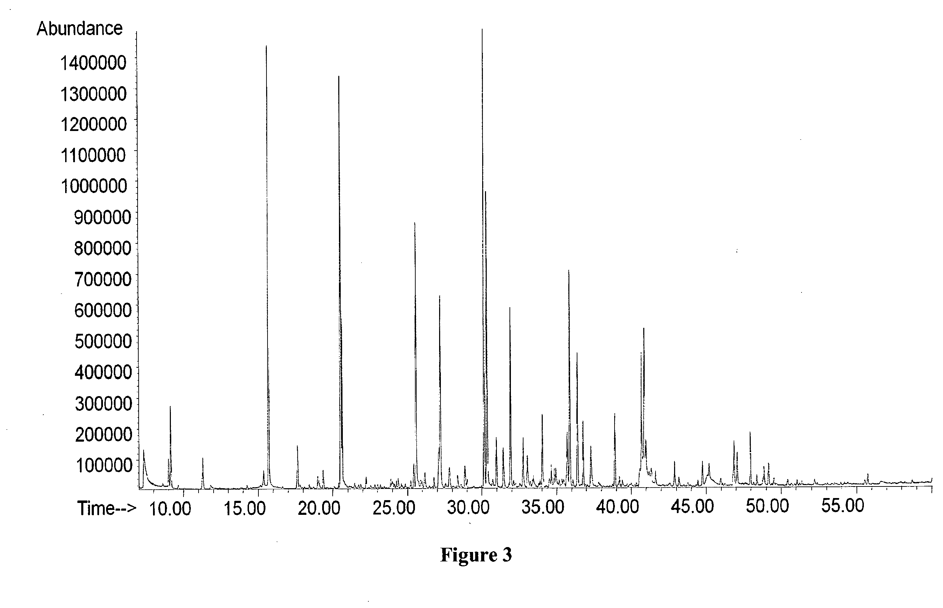

The resultant total ion current chromatogram is shown in Figure 3. Key aroma compounds which occur in cocoa and chocolate were detected including 2-methylbutanal (9.02min), 3-methylbutanal (9.15min), 2-heptanone (20.52min), heptanal (20.67min), 2-nonanone (30.17min), nonanal (30.342min), trimethylpyrazine (30.80min) and linalool (36.78min). Persons familiar with gas chromatography will be aware that the exact time at which a compound will elute from a polar column such as DB-Wax will be influenced by the age and previous sample history of the column. The retention times quoted are for guidance only.

## Claims

1. A method of producing an aromatised liquid, the method comprising:
a) providing a gas comprising aroma derived from cocoa or cocoa-based products, and water;
b) condensing the aroma and water comprising gas, to provide an aromatised liquid aqueous phase and a gas phase; and
c) subjecting the gas phase obtained by step b) to pressurisation in the presence of an absorption liquid to produce an aromatised liquid.

2. The method of claim 1 wherein the absorption liquid present during pressurisation in step c) comprises all, or a part of, the aqueous liquid phase obtained in step b).

3. The method of any of claims 1 or 2 wherein the absorption liquid present during pressurisation in step c) is cocoa butter.

4. The method of any of the preceding claims wherein the aroma and water comprising gas is condensed at a temperature between 0 and 40°C.

5. The method of any of the preceding claims wherein the aroma and water comprising gas is condensed at a pressure between 0.1 and 3 bar absolute pressure.

6. The method of any of the preceding claims wherein the gas phase obtained by step b) is pressurised to a pressure of between 1 and 20 bar absolute pressure in step c).

7. The method of claim 6 wherein the gas phase obtained by step b) is pressurised to a pressure of between 2 and 20 bar absolute pressure in step c).

8. The method of any of the preceding claims wherein the gas phase obtained by step b) is subjected to a maximum temperature of between 0 and 50°C during the pressurisation in step c).

9. The method of any of the preceding claims wherein the pressurisation in step c is performed in a liquid ring compressor.

10. The method of any of the preceding claims wherein the gas comprising aroma from cocoa or a cocoa based product is provided by stripping aroma from liquid chocolate or a liquid chocolate compound with a gas, preferably steam.

11. The method of claim 10 further comprising mixing the aromatised aqueous liquid obtained in step c) or the aroma compounds obtained after step d) and/or e) with the liquid chocolate or liquid chocolate compound which had been used to provide the gas in step a).

12. The method of any of the preceding claims further comprising the step
d) refining the aromatised liquid obtained in step c), for example by selectively collecting specific aroma compounds from the liquid.

13. The method of any of the preceding claims further comprising the step
e) separating the absorption liquid from the aroma compounds contained in the aromatised liquid obtained in step c).

## Patentansprüche

1. Verfahren zur Herstellung einer aromatisierten Flüssigkeit, mit den folgenden Schritten:
a) ein Gas, das ein von Kakao oder Produkten auf Kakaobasis stammendes Aroma sowie Wasser enthält, wird bereitgestellt;
b) das Aroma und Wasser enthaltende Gas wird kondensiert, um eine wässrige Phase der aromatisierten Flüssigkeit sowie eine Gasphase bereitzustellen; und
c) die durch den Schritt b) erhaltene Gasphase wird in Gegenwart einer Absorptionsflüssigkeit einer Druckbeaufschlagung zur Herstellung einer aromatisierten Flüssigkeit ausgesetzt.

2. Verfahren gemäß Anspruch 1, wobei die während der Druckbeaufschlagung in Schritt c) vorliegende Absorptionsflüssigkeit die gesamte oder einen Teil der in Schritt b) erhaltenen wässrigen Flüssigkeitsphase umfasst.

3. Verfahren gemäß einem der Ansprüche 1 oder 2, wobei die während der Druckbeaufschlagung in Schritt c) vorliegende Absorptionsflüssigkeit aus Kakaobutter besteht.

4. Verfahren gemäß einem der vorhergehenden Ansprüche, wobei das Aroma und Wasser enthaltende Gas bei einer Temperatur zwischen 0 und 40°C kondensiert wird.

5. Verfahren gemäß einem der vorhergehenden Ansprüche, wobei das Aroma und Wasser enthaltende Gas bei einem Druck zwischen 0,1 und 3 Bar Absolutdruck kondensiert wird.

6. Verfahren gemäß einem der vorhergehenden Ansprüche, wobei die durch den Schritt b) erhaltene Gasphase in Schritt c) auf einen Druck zwischen 1 und 20 Bar Absolutdruck druckbeaufschlagt wird.

7. Verfahren gemäß Anspruch 6, wobei die durch den Schritt b) erhaltene Gasphase in Schritt c) auf einen Druck von 2 bis 20 Bar Absolutdruck beaufschlagt wird.

8. Verfahren gemäß einem der vorhergehenden Ansprüche, wobei die durch den Schritt b) erhaltene Gasphase während der Druckbeaufschlagung in Schritt c) einer Höchsttemperatur zwischen 0 und 50°C ausgesetzt wird.

9. Verfahren gemäß einem der vorhergehenden Ansprüche, wobei die Druckbeaufschlagung in Schritt c) in einem Flüssigkeitsringverdichter erfolgt.

10. Verfahren gemäß einem der vorhergehenden Ansprüche, wobei das Gas, das Aroma aus Kakao oder einem Produkt auf Kakaobasis enthält, durch Austreiben des Aromas aus einer flüssigen Schokolade oder einer flüssigen Schokoladenverbindung mit einem Gas, vorzugsweise Dampf, bereitgestellt wird.

11. Verfahren gemäß Anspruch 10, weiterhin mit dem Schritt des Vermischens der in Schritt c) erhaltenen aromatisierten, wässrigen Flüssigkeit oder der nach Schritt d) und/oder e) erhaltenen Aromaverbindungen mit der flüssigen Schokolade oder der flüssigen Schokoladenverbindung, die zur Bereitstellung des Gases in Schritt a) eingesetzt worden ist.

12. Verfahren gemäß einem der vorhergehenden Ansprüche, weiterhin mit dem Schritt:
d) Verfeinern der in Schritt c) erhaltenen, aromatisierten Flüssigkeit, beispielsweise durch selektives Aufnehmen bestimmter Aromaverbindungen aus der Flüssigkeit.

13. Verfahren gemäß einem der vorhergehenden Ansprüche, weiterhin mit dem Schritt:
e) Trennen der Absorptionsflüssigkeit von den Aromaverbindungen, welche in der in Schritt c) erhaltenen, aromatisierten Flüssigkeit enthalten sind.

## Revendications

1. Procédé de production d'un liquide aromatisé, le procédé comprenant :
a) fourniture d'un gaz comprenant de l'arôme dérivé du cacao ou de produits à base de cacao, et de l'eau ;
b) condensation du gaz comprenant de l'arôme et de l'eau pour fournir une phase aqueuse liquide aromatisée et une phase gazeuse ; et
c) soumettre la phase gazeuse obtenue par l'étape b) à une mise sous pression en présence d'un liquide d'absorption pour produire un liquide aromatisé.

2. Procédé selon la revendication 1, dans lequel le liquide d'absorption présent au cours de la mise sous pression dans l'étape c) comprend toute la phase liquide aqueuse obtenue dans l'étape b) ou une partie de celle-ci.

3. Procédé selon l'une quelconque des revendications 1 ou 2, dans lequel le liquide d'absorption présent au cours de la mise sous pression dans l'étape c) est du beurre de cacao.

4. Procédé selon l'une quelconque des revendications précédentes, dans lequel le gaz comprenant de l'arôme et de l'eau est condensé à une température entre 0 et 40°C.

5. Procédé selon l'une quelconque des revendications précédentes, dans lequel le gaz comprenant de l'arôme et de l'eau est condensé à une pression entre 0,1 et 3 bar de pression absolue.

6. Procédé selon l'une quelconque des revendications précédentes, dans lequel la phase gazeuse obtenue par l'étape b) est mise sous pression à une pression entre 1 et 20 bar de pression absolue dans l'étape c).

7. Procédé selon la revendication 6, dans lequel la phase gazeuse obtenue par l'étape b) est mise sous pression à une pression entre 2 et 20 bar de pression absolue dans l'étape c).

8. Procédé selon l'une quelconque des revendications précédentes, dans lequel la phase gazeuse obtenue par l'étape b) est soumise à une température maximum comprise entre 0 et 50°C au cours de la mise sous pression dans l'étape c).

9. Procédé selon l'une quelconque des revendications précédentes, dans lequel la mise sous pression dans l'étape c) est réalisée dans un compresseur à anneau liquide.

10. Procédé selon l'une quelconque des revendications précédentes, dans lequel le gaz comprenant de l'arôme provenant de cacao ou d'un produit à base de cacao est fourni en retirant de l'arôme à partir de chocolat liquide ou d'un composé de chocolat liquide avec un gaz, de préférence de la vapeur.

11. Procédé selon la revendication 10, comprenant en outre le mélange du liquide aqueux aromatisé obtenu dans l'étape c) ou des composés d'arôme obtenus après l'étape d) et/ou e) avec le chocolat liquide ou le composé de chocolat liquide qui a été utilisé pour fournir le gaz dans l'étape a).

12. Procédé selon l'une quelconque des revendications précédentes, comprenant en outre l'étape
d) raffinage du liquide aromatisé obtenu dans l'étape c), par exemple en collectant sélectivement des composés d'arôme spécifiques à partir du liquide.

13. Procédé selon l'une quelconque des revendications précédentes, comprenant en outre l'étape
e) séparation du liquide d'absorption des composés d'arôme contenus dans le liquide aromatisé obtenu dans l'étape c).
